# EUROPEAN PATENT SPECIFICATION

(11) **EP 3 476 913 B1**
(45) Date of publication and mention of the grant of the patent: **25.03.2020**
(21) Application number: 17198136.8
(22) Date of filing: 24.10.2017
(51) Int. Cl.: C09J 175/08, C08G 18/12, C08G 18/20, C08G 18/24, C08G 18/30, C08G 18/48, C08G 18/76, E04F 15/00, B32B 27/40, C08G 101/00

(54) **POLYURETHANE ADHESIVE**
POLYURETHANKLEBSTOFF
ADHÉSIF EN POLYURÉTHANE

(43) Date of publication of application: 01.05.2019
(73) Proprietor: Polytex Sportbeläge Produktions-GmbH, 47929 Grefrath (DE)
(72) Inventor: FINDER, Zdenka, 86701 Rohrenfels-Ballerdorf (DE); SICK, Stephan, 47877 Willich-Neersen (DE); HALLY, Stefan, 41334 Nettetal (DE); MÜLLER, Wolfgang, 47929 Grefrath-Oedt (DE); LOHR, Ivo, 47906 Kempen (DE)
(74) Representative: Richardt Patentanwälte PartG mbB

(56) References cited:
- EP-A1- 0 557 792
- EP-A2- 2 262 842
- US-B1- 6 376 567

## Description

### Field of the invention

The invention relates to a method for producing a 1C prepolymer mixture, in particular a prepolymer mixture for use as adhesive.

### Background and related art

Adhesives are substances applied to one surface, or both surfaces, of two separate items that binds them together and resists their separation. The use of adhesives offers many advantages over binding techniques such as sewing, mechanical fastening, thermal bonding, etc. These include the ability to bind different materials together, to distribute stress more efficiently across the joint, the cost effectiveness of an easily mechanized process, and others.

Some adhesives perform a chemical reaction in order to harden ("cure"). Moisture curing adhesives, e.g. polyurethane (PU) based adhesives, cure when they react with moisture present on the substrate surface or in the air.

Multi-component adhesives, e.g. two-component (2C) adhesives, harden by mixing two or more components which chemically react. This reaction causes polymers to cross-link into acrylics, urethanes, and epoxies. One-part (or "one component" - 1C) adhesives harden without the presence of a further component that needs to be added by a user. Rather, factors that are present in the environment where the adhesive is applied - e.g. UV, heat or moisture (for PU adhesives) are sufficient for triggering the chemical reactions that generate the solid PU adhesive layer.

PU based adhesives are commonly used for installing pre-fabricated floorings, e.g. pre-fabricated PU roll mats at their destination. The mat is rolled out and glued down to the floor with a polyurethane adhesive.

However, at low temperatures (<10 °C), many adhesives, in particular PU adhesives, cannot be used for attaching floorings to the ground.

This is because low temperatures significantly increase the viscosity of the PU adhesive which prohibits the spreading of the adhesive on the ground. An inhomogeneous application of adhesive may result in an uneven flooring and may reduce the strength of adhesion due to mechanical tensions in the adhesion layer.

Moreover, at low temperatures the PU generating polymerization and the hardening is so slow that the process of rolling out the mat and any further step of sealing the mat or connecting multiple lanes of the mat are delayed for many hours or even many days. If the mat is rolled out long before the PU adhesive has hardened, there is an increased risk that lanes are moved accidentally relative to each other. This may result in the generation of wrinkles in the applied flooring material or in gaps between the lanes which cannot be corrected once the adhesive has hardened. Moreover, the slow or incomplete hardening of known PU adhesives at low temperatures may increase the susceptibility of the applied PU adhesive to rain, moisture and other factors which may reduce the quality of the adhesive and thus the quality of the flooring, e.g. running tracks or other forms of sports fields that is to be built.

As a consequence, known adhesives, in particular PU adhesives, cannot be used for attaching material layers to the ground during the cold season or in regions with cold weather all year round.

US patent 6,376,567 B1 describes polyisocyanate compositions, a process for these polyisocyanate compositions, and a process for the production of cold cured flexible molded foams. The polyisocyanate composition comprises a polyisocyanate component and is characterized by an NCO group content of more than about 15%. It comprises (1) from about 70 to 99% by weight of a polymethylene poly(phenyl isocyanate) having an NCO group content of from about 30 to about 33%, and from about 40% to about 90% by weight of a monomer content and (2) from about 1 to about 30% by weight of a prepolymer of diphenylmethane diisocyanate having an NCO group content of from about 2% to about 20%. The polyisocyanate composition comprises the reaction product of: (a) diphenylmethane diisocyanate; and (b) a polyether polyol.

European patent application 93102026.7 describes a process for the preparation of fluorochlorohydrocarbon-free, low-density flexible polyurethane foams and flexible elastic polyurethane moulded foams and polyisocyanate mixtures based on diphenylmethane diisocyanate modified with urethane groups.

International patent application WO 2009/118112 A2 describes 2,2'-diphenylmethane diisocyanate (2,2'-MDI)-based isocyanate mixtures, a method for producing the same and the use of the mixtures in the production of polyisocyanate polyaddition products.

### Summary

It is an objective of the present invention to provide for an improved method for producing a 1C polyurethane system adapted for use as PU adhesive at temperatures at or below 10°C as specified in the independent claim. Embodiments of the invention are given in the dependent claims. Embodiments of the present invention can be freely combined with each other if they are not mutually exclusive.

In one aspect, the invention relates to a method for producing a 1C polyurethane adhesive. The method comprises creating an initial mixture. The initial mixture comprises a mixture of MDI monomers, polymeric MDI and a polyol component. The MDI monomers comprise 2,2' MDI, 2,4' MDI and 4,4' MDI. The polyol component comprises an EO-end-capped polypropylene glycol and a further polyol. The method further comprises reacting the initial mixture into a prepolymer mixture. The prepolymer mixture comprises a prepolymer being the reaction product of the MDI monomers, the polymeric MDI and the polyol component. The prepolymer mixture is the 1C polyurethane adhesive.

This may be advantageous, because the 1C PU adhesive generated according to embodiments of the invention is adapted to harden at temperatures at or below 10°C. Thus, the prepolymer mixture used as the adhesive can be used for attaching a floor layer to the ground at "standard" weather conditions, e.g. at temperatures in the range of 10-25°C or higher, as well as under low temperature conditions. Thus, embodiments of the invention allow installing and firmly attaching flooring layers, in particular PU-based outdoor surfaces, especially tiles, matts, strip materials and carpet sheetings, at the use site also during the cold season or in regions with constant cold weather. Typically, at low temperatures, the viscosity of 1C prepolymer mixtures is too high to allow a homogeneous, easy spreading of the PU adhesive over larger areas. Moreover, at low temperatures, the speed of the PU generation reaction is very slow resulting in a prolonged or incomplete hardening process.

According to the Van't Hoff equation, decreasing the environmental temperature by 10° C will reduce the speed of a chemical reaction roughly by one half. However, it has been surprisingly observed that the negative impact of low temperatures on the hardening time can be counter-acted by the use of EO-end capped PPG. By including EO-end capped PPG in the initial mixture, a 1C PU system is provided that yields PU adhesive that can be used for attaching floor layers, e.g. of a sport field, to the ground even at low temperatures.

EO-end capped PPG is highly hygroscopic and the water attracted by the EO-end-capped PPG thus ensures that already small amounts of water in the educts or the environmental are attracted and used for generating PU foam. EO-end capped PPG have been observed to ensure a hardening process that is on the one hand slow enough to allow a thorough mixing of the prepolymer mixture with other substances, e.g. rubber granules, but is on the other hand fast enough to allow a complete hardening of the elastic PU layer even at temperatures below 10°C within several hours.

Many tests with various combinations of catalysts were conducted to generate a 1C PU system having the desired PU polymerization and hardening kinetics (homogeneously spreadable, hardening within a day without extra water, within one hour when water is applied) at temperatures below 10°C, but all tests failed. This is because catalysts act in very small amounts, but their effect cannot be increased linearly: with increasing amounts of catalyst, the reaction speed of the PU generation and hardening soon reaches a plateau. Thus, increased amounts of catalyst cannot compensate for the decrease in reaction speed caused by low temperatures. Moreover, high amounts of catalysts are expensive and are often considered as harmful for the environment. However, it has been observed that combining catalysts with the highly hygroscopic EO(ethylene-oxide)-end-capped PPG (polypropylene glycol), a PU adhesive can be created that hardens quickly even at low outside temperatures and even if no extra water is applied to boost the reaction. The attracted water (irrespective of whether actively provided by a user or passively provides via the moisture of the air and the ground) reacts with the components of the prepolymer mixture into a solid PU mass, e.g. a PU foam.

Thus, the 1C prepolymer mixture according to embodiments of the invention may be adapted to provide a PU adhesive adapted to homogeneously harden also at low temperatures and thus is suited for use for attaching outdoor floorings, e.g. floorings of a sport field or playground or artificial turf lanes to the ground also at low temperatures.

The adhesive according to embodiments of the invention has self-leveling capabilities for providing a glue layer with an even surface, and is able to penetrate small cracks and depressions in the ground, thereby firmly binding the floor layer to the ground. On the one hand, the PU adhesive according to embodiments allows easy handling and installation of any material layer, in particular layers comprising PU, because the PU adhesive may form covalent bounds with PU molecules of the floor layer. The floor layer can be, for example, an elastic layer made of a mixture of a PU-binder and rubber granules, or the PU-based backing of an artificial turf. The adhesive will harden within an acceptable time, typically several hours up to one day, even at temperatures below 10°C, or even below 5°C or lower.

It has been observed that embodiments of the invention provide for a 1C polyurethane adhesive that is adapted to harden at temperatures at or below 5°C , and even at or below 2°C within 24 hours even if no water is additionally applied to boost the PU generating reaction.

According to embodiments, the initial mixture comprises the 2,2' monomeric MDI in an amount of 0.5% - 2.0% by weight of the initial mixture; the 2,4' monomeric MDI in an amount of 8.99% - 10.1 % by weight of the initial mixture; and the 4,4' monomeric MDI in an amount of 21.69% - 26.0% by weight of the initial mixture.

According to embodiments, the initial mixture comprises the polymeric MDI in an amount of 3.6% - 7.2% by weight of the initial mixture.

According to embodiments, the initial mixture comprises the further polyol in an amount of 24% - 34% by weight of the initial mixture.

According to embodiments, the further polyol is polypropylene glycol (PPG), in particular PPG having an average molecular weight of about 2000 g/mol. Polypropylene glycol is produced by ring-opening polymerization of propylene oxide. According to embodiments, the PPG used as the further polyol is manufactured by polymerizing propylene glycol and propylene oxide.

According to embodiments, the EO-end-capped PPG is manufactured by polymerizing propylene glycol, propylene oxide, and ethylene oxide. Preferably, the reaction mixture for this polymerization comprises about 13%-23%, preferably 18% by its weight the ethylene oxide.

According to embodiments, the further polyol has a viscosity of 250-450 mPa/s at 25°C.

According to embodiments, the further polyol has an average molecular weight of 1700-2300 g/mol.

According to embodiments, the further polyol has an OH-number of 50-60.

For example, commercially available PPG is available that has a viscosity of 350 mPa/s at 25°C, an average molecular weight of 2000 g/mol and an OH-number of 56.

According to embodiments, the initial mixture comprises the EO-end capped polypropylene glycol in an amount of 22.7% - 31.0% by weight of the initial mixture.

According to embodiments, the EO-end-capped polypropylene glycol has a viscosity of 650-850 mPa/s at 25°C and/or an average molecular weight of 3700-4300 g/mol and/or an OH-number of 25-35. According to a preferred example, the EO-end capped PPG has a viscosity of 780 mPa/s at 25°C, an average molecular weight of 4000 g/mol and an OH-number of 29.

According to embodiments, the prepolymer mixture is applied on the ground at an environmental temperature lower than 10°C, in particular at a temperature lower than 5°C, in particular at a temperature lower than 2°C or even at a temperature lower than 0°C, e.g. in a range from 10°C to -5°C. It has been observed that the speed of the PU hardening reaction is fast enough to allow a complete hardening within a day or faster even at low temperatures, e.g. -5° C.

According to embodiments, the initial mixture comprises a curing catalyst and an amine blowing catalyst. For example, the curing catalyst can be a dioctyltin mercaptide catalyst, and the amine blowing catalyst can be 2,2'-Dimorpholinodiethylether (DMDEE).

According to embodiments, the initial mixture comprises the curing catalyst in an amount of 0,003-0.007% by weight of the reaction mixture. For example, the reaction mixture can comprise the curing catalyst in an amount of 0.003%-0.007%, An example of a suitable dioctyltin mercaptide catalyst is commercially available under the name "Fomrez UL-29". For example, the initial mixture can comprise 0.0056% Fomrez UL-29. In addition, the initial mixture comprises the amine catalyst in an amount of 0.19%-0.4% by weight of the initial mixture, e.g. comprises 0.31% DMDEE.

The curing catalyst and the amine blowing catalyst catalyze the generation of polyurethane foams and adhesives. Polyurethanes are produced by the reaction of polyol, polyisocyanate and water. The selection of the above specified catalysts and their respective amounts allows to control and balance between the gelling and blowing reactions, to optimize the foam properties and the curing speed during the foam formation, whereby the specified amount ranges have been shown to provide, in combination with the EO-end-capped PPG, a PU adhesive adapted for attaching floorings to the ground also at cold temperatures.

According to embodiments, the prepolymer mixture comprises the prepolymer in an amount of 88% - 90% by weight of the prepolymer mixture. The monomeric 2,2' MDI and 2,4' MDI combined are contained in the prepolymer mixture in an amount of 10%-12%- by weight of the prepolymer mixture.

According to embodiments, the initial mixture further comprises phosphor acid and/or a moisture scavenger and/or rheological additives. The phosphoric acid is preferably a phosphoric acid having a concentration of 85%. The phosphor acid may increase shelf life of the prepolymer mixture. The moisture scavenger may prevent a premature polymerization and hardening of the prepolymer mixture by removing moisture from all components in the initial mixture, e.g. the polyol component or pigments, if any.

According to embodiments, the initial mixture comprises:
- the 2,2' monomeric MDI in an amount of 0.5% - 2.0% by weight of the initial mixture;
- the 2,4' monomeric MDI in an amount of 8.99% - 10.1% by weight of the initial mixture;
- the 4,4' monomeric MDI in an amount of 21.69% - 26.0% by weight of the initial mixture;
- the MDI polymer in an amount of 3.6%-7.2% by weight of the initial mixture;
- the further polymer in an amount of 24% - 34% by weight of the initial mixture;
- the EO-end capped polypropylene glycol in an amount of 22.7% - 31.0% by weight of the initial mixture;
- a monofunctional isocyanate adapted to react with water into an inert amide in an amount of 0.3%-1.0% by weight of the initial mixture; and
- phosphor acid in an amount of 0.01 % - 0.02% by weight of the initial mixture.

According to embodiments, the moisture scavenger is a reactive mono-functional isocyanate which reacts with water generating an inert amide. It eliminates slight parts of humidity and prevents moisture related problems in the formulation of the polyurethane adhesive. Mono-functional isocyanates that can be used as moisture scavengers are commercially available, for example, as "Additive TI". It rapidly reacts with water and generates carbon dioxide and toluene sulfonamide which is generally inert towards further reaction with alkyl and aryl isocyanates.

In a further aspect, the invention relates to a method of attaching a floor layer, whereby the outside temperatures can be (bud does not need to be) below 10°C, or even below 5°C, or even below 2°C. The method comprises applying the polyurethane adhesive created according to any one of the embodiments described herein. The polyurethane adhesive is applied on a ground or on a seaming tape, The method further comprises letting the applied polyurethane adhesive foam and expand. The method further comprises placing the floor layer on top of the expanded polyurethane adhesive before the adhesive has hardened completely.

For example, in case the application of the floor layer comprises rolling out two parallel lanes of sport mats or artificial turf mats, the two adjacent lanes can be connected to each other to prevent the forming of gaps and open crevices between the lanes. For example, the two adjacent edges of the two lanes can be lifted and a seaming tape can be placed between the ground and the two lanes. Then, the prepolymer mixture is selectively applied on the seaming tape, not on the ground, and the two lifted edges are released and pressed down onto the adhesive layer of the seaming tape.

The time until the PU adhesive has cured completely depends on the outside temperature and the presence of water. For example, at 5°C environmental temperature, the adhesive according to embodiments of the invention hardens within 10 minutes if water droplets are applied, e.g. by means of an atomizer. The PU adhesive will harden within several hours, at the latest within 24 h after being applied to the ground or the seaming tape, if the only source of water is the moisture in the air and in the ground. The floor layer has to be applied before the adhesive has hardened. For example, the floor layer should be applied within 5 minutes after applying the adhesive and water droplets and within 1-2 hours after applying the adhesive without any additional water.

According to embodiments, dispensed water droplets are applied on the adhesive after the adhesive was applied on the ground or on the seaming tape. The water droplets are applied for accelerating the hardening of the adhesive.

According to embodiments, the side of the floor layer that is brought in contact with the expanded polyurethane adhesive (the "lower side" of the floor layer) comprises grooves. The PU adhesive is applied in such amount that the foamed, fully expanded adhesive layer is at least as high as the grooves.

According to embodiments, the floor layer is an artificial turf or a hybrid turf support. The grooves are formed and delimited by tuft rows or seam rows protruding from the artificial turf. Synthetic fibers are incorporated in the artificial turf or the hybrid turf support along the tuft grooves or seam grooves. The synthetic fibers emanate from the turf in opposite direction than the tuft rows or seam rows.

For example, the grooves of many types of artificial turf or hybrid turf have a depth of at least 2 mm, preferably at least 4 mm, e.g. 2-6mm.

According to embodiments, the polyurethane adhesive is applied on the ground at an environmental temperature lower than 10°C, in particular at a temperature lower than 5°C, in particular at a temperature lower than 0°C, e.g. in a range from 10°C to -5°C.

According to embodiments, the floor layer is selected from a group comprising:
- an elastic sub-construction layer for athletic tracks and playgrounds;
- an elastic base layer for athletic tracks and playgrounds;
- an in-situ foamed elastic athletic track or playground surface;
- a hybrid turf support structure;
- an artificial turf;
- outdoor surfaces, in particular tiles, matts, strip materials and carpet sheetings.

In a further aspect, the invention relates to an elastic floor layer attached to the ground by a method for attaching a floor layer according to any one of the embodiments described herein.

According to embodiments, the floor layer is an elastic sub-construction layer for athletic tracks and playgrounds. According to further embodiments, the floor layer is an elastic base layer for athletic tracks and playgrounds. According to still further embodiments, the floor layer is artificial turf.

In a further aspect, the invention relates to a layered floor structure comprising a base layer, e.g. concrete, wood or stone, an adhesive layer comprising a 1C polyurethane adhesive manufactured by a method according to any one of the embodiments described herein, and a floor layer attached to the ground by the adhesive layer. For example, the ground (also referred to as "base layer") on which the prepolymer mixture is applied can consists of concrete, soil, sand, wood or a mixture thereof.

According to embodiments, the application of the prepolymer mixture to the ground comprises applying a first lane of the prepolymer mixture to the ground, thereby generating a first lane of the PU based adhesive. Before the first lane of the adhesive has solidified, applying the floor layer on the adhesive layer such that a the floor layer gets in contact with the adhesive layer. Preferably, slight pressure is applied on the floor layer, e.g. by means of a roll, in order to ensure that the PU-based adhesive, which may be a PU foam that continually expands, can penetrate grooves and other depressions in the lower side of the floor layer. This may ensure that the floor layer is firmly fixed to the ground. In case the floor layer is artificial turf, the use of the PU based 1C adhesive according to embodiments of the invention may be particularly advantageous, because the adhesive is able to fill the grooves between the tuft rows and to get in contact with portions of the synthetic fibers, thereby firmly fixing the fibers to the ground.

"Polyurethanes" (PU) as used herein are any type of polymer containing a urethane linkage. The urethane linkage (carbamate group) is -NH-CO-O-. PUs are formed by reacting isocyanates with compounds that have an active hydrogen, such as diols, that contain hydroxyl-groups. Since there are many compounds containing active hydrogens and many different diisocyanates, the number of polyurethanes that can be synthesized is large. The specific properties of the polyurethane can be tailored to a specific need by combining the appropriate compounds.

Polymers are macromolecules made up of smaller, repeating units known as monomers. Generally, they consist of a primary long-chain backbone molecule with attached side groups.

A "1C PU system" as used herein is a reaction mixture that cures into polyurethane polymers also in the absence of a further actively added compound (an "extender") (as required by 2C systems). In preferred embodiments, the moisture of the environmental air or soil is sufficient for initializing and completing the reaction of the prepolymer mixture into polyurethane.

In some embodiments, the PU adhesive is applied manually on the ground. It is preferably applied selectively in regions of a field where a floor mat is to be installed shortly after. Alternatively, in particular for smaller applications, the adhesive is applied on the ground of the whole field.

An "sport field", "pitch" or "sports ground" as used herein is an indoor or outdoor playing area for various sports, e.g. soccer, tennis, hand ball, sprint races and others.

A "foam" as used herein is a colloidal dispersion of a gas in a liquid or solid medium.

A "PU foam" as used herein is any liquid or hardened PU mass comprising gas bubbles or cells willed with gas. The CO2 gas generated during the hardening process result in the generation of a cellular structure of the PU matrix of the binder. When the PU binder has hardened, the cells will comprise the CO2 or environmental air. Preferably, the PU foam generated by the prepolymer mixture is a micro-foam as the mass of the binder in the rubber-granule-PU-binder mixture ("supplemented prepolymer mixture") may be too low to result in a significant foam generation and the bubbles may be very small.

When the prepolymer mixture is applied on the ground, the mixture is typically a viscous liquid with (very small) gas bubbles, i.e., a foam. The polymerization and foaming reactions continues in the applied adhesive until the PU generation has completed and the adhesive layer has completely hardened.

The "hydroxyl number" is the number of milligrams of potassium hydroxide required to neutralize the acetic acid taken up on acetylation of one gram of a chemical substance that contains free hydroxyl groups. The hydroxyl value is a measure of the content of free hydroxyl groups in a chemical substance, usually expressed in units of the mass of potassium hydroxide (KOH) in milligrams equivalent to the hydroxyl content of one gram of the chemical substance.

### Brief description of the drawings

In the following embodiments of the invention are explained in greater detail, by way of example only, making reference to the drawings in which:
- Figure 1: depicts the application of a PU adhesive on a wetted sport field ground;
- Figure 2: depicts the application of a PU adhesive on a dry sport field ground;
- Figure 3: depicts the two PU based lanes directly attached to the ground by an adhesive layer;
- Figure 4: depicts two lanes of a running track attached to each other via a seaming tape covered with the PU adhesive;
- Figure 5: depicts a piece of artificial turf comprising a backing, the backing comprising protrusions and depressions filled with the PU adhesive;
- Figure 6: depicts an athletic track comprising multiple lanes rolled out over a fresh layer of PU adhesive;
- Figure 7: is a flowchart of a method of generating a prepolymer mixture that represents a 1C PU system adapted for generating an elastic PU layer at low temperatures;
- Figure 8: depicts a temperature controlled container used as test environment;
- Figure 9: depicts the composition of an initial mixture adapted for generating a 1C PU adhesive adapted for use at low temperatures.

### Detailed description

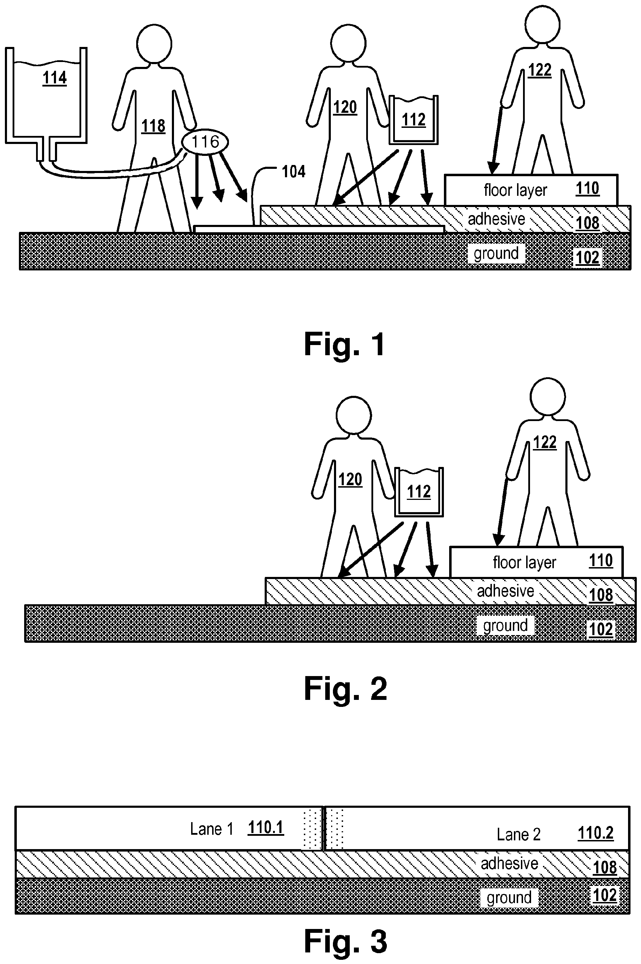

**Figure 1** depicts the application of a PU adhesive on a wetted sport field ground. A first user 118 carries a portable water tank 114 coupled to a nebulizer 116. Immediately before the PU adhesive is to be applied on the ground, the first user generates fine water droplet with the nebulizer 116 that form a thin water film 104 on the ground 102. The ground can be, for example, concrete, sand, wood, clay or a mixture thereof. The ground 102 can also be a synthetic layer or a composit material comprising synthetic as well as natural components.

Before the water film 104 has evaporated, a second user 102 who carries a container with the prepolymer mixture 112 homogeneously spreads the mixture 112 over the wet ground. The PU adhesive can be applied, for example, in a wide temperature range including, but not limited to 0 to 10°C. The applied prepolymer mixture 112 forms the PU adhesive layer 108. The contact of the prepolymer mixture of the adhesive layer with the water in the film 104 and with moisture in the air triggers the generation of carbon dioxide (foaming reaction) and the generation of polyurethane polymers (hardening reaction). Thus, the adhesive layer 102 is actually a PU foam that continues to expand until the foaming reaction has completed and the adhesive layer has hardened.

However, before the adhesive layer 108 has hardened, a third user 122 rolls out a mat 110 or another form of a sheet-like material referred herein as "floor layer" and brings the rolled out material in contact with the adhesive layer 108. Instead of a rolled out mat, floor panels or other material types can be used. For example, the PU-adhesive manufactured according to embodiments of the invention can be used as indoor or outdoor floor element. The floor layer 110 can be, for example, an elastic layer made of a mixture of a PU binder and rubber granules as commonly used for playgrounds, running tracks and various other types of sport field grounds. Likewise, the floor layer 110 can be an artificial turf or a hybrid turf or a support structure for hybrid turf. Preferably, the sheetlike material 110 comprises polyurethane that can be attached particularly firmly by means of a PU-based adhesive. As the adhesive 108 in the presence of water 104 typically hardens within 10 minutes even at temperatures below 10° C or even below 5° C, the sheetlike material layer 110 should be applied immediately or within a few minutes after the adhesive layer 108 was applied on the ground.

For example, the first user may walk along a sports field ground where an elastic mat shall be installed and attached. The first user 118 generates the water film 104 and is immediately followed by the second user 102 applying the adhesive layer. The second user may be immediately followed by the third user 122 who rolls out the mat.

Alternatively, the application of the water film and/or the application of the adhesive layer and/or the application of the floor layer 110 can be performed by a respective machine, or by a single machine that is adopted to automatically perform two or three of the above described operations. In case a machine, e.g. a vehicle, is used, the vehicle may comprise a levelling unit being a wider in shape than an injection unit so that the levelling unit can smooth the applied adhesive.

Typically, the PU adhesive 108 has a thickness of about 1 to 2 mm right after having been applied on the ground but will expand to a thickness of about 3 to 10 mm before the adhesive has hardened.

The viscosity of the 1C PU system ("prepolymer mixture") 112 is preferably low enough to allow easy spreading of the adhesive, e.g. by means of a squeegee or similar device. Thus, uneven ground surfaces, damaged areas and hollows in the ground are filled by the PU adhesive that solidifies after some minutes or hours at low temperatures. However, the viscosity is preferably still high enough to retain the CO2 bubbles to allow the generation of a PU foam and the expansion of the adhesive layer.

In hardened state, the adhesive layer firmly attaches any floor layer having been applied on top of the adhesive layer while still in liquid state to the ground.

Thus, embodiments of the invention may allow easily attaching floor layers, in particular sport floor layers, to the ground floors even at temperatures below 10°C, below 5°C and below 2°C.

Preferentially, the prepolymer mixture used as PU adhesive is applied on an outdoor ground, but it is also possible to apply the method for attaching floor layers in indoor sport field floorings to the ground.

The foam generation may start immediately when the prepolymer mixture contacts the water film 104 or the moist air or soil. Hence, the supplemented prepolymer mixture may already comprise some CO2 bubbles when applied to the ground. Nevertheless, the prepolymer mixture can still be characterized as a (viscous) liquid. While the chemical reactions for generating the CO2 gas and the PU polymers continue, the liquid 1C PU system having been applied on the ground becomes more and more viscous and finally transforms into a solid PU mass that constitutes the PU adhesive layer.

**Figure 2** depicts the application of a PU adhesive on a dry ground, e.g. a dry sport field ground. Wetting the ground, as depicted in figure 1, may be advantageous as the hardening of the adhesive and thus also the attachment of the floor layer 110 is accelerated. Nevertheless, the wetting step is optional. In many cases, as depicted in figure 2, the humidity of the base layer or of the environmental air will be sufficient to allow the applied 1C PU adhesive to harden within several hours, or at least within 24 hours. When the prepolymer mixture gets in contact with moist air and/or is applied on a moist base layer, CO2 and the PU polymer are continuously generated, yielding a continuously expanding, foamed PU adhesive.

**Figure 3** depicts the two PU based lanes 110.1, 110.2 directly attached to the ground by an adhesive layer 108 generated according to a further embodiment of the invention. This may have the advantage that the complete area of the floor layer is firmly attached to the ground. This may be particularly useful for thin, light weight floor layers 110. However, a comparatively large amount of adhesive is consumed.

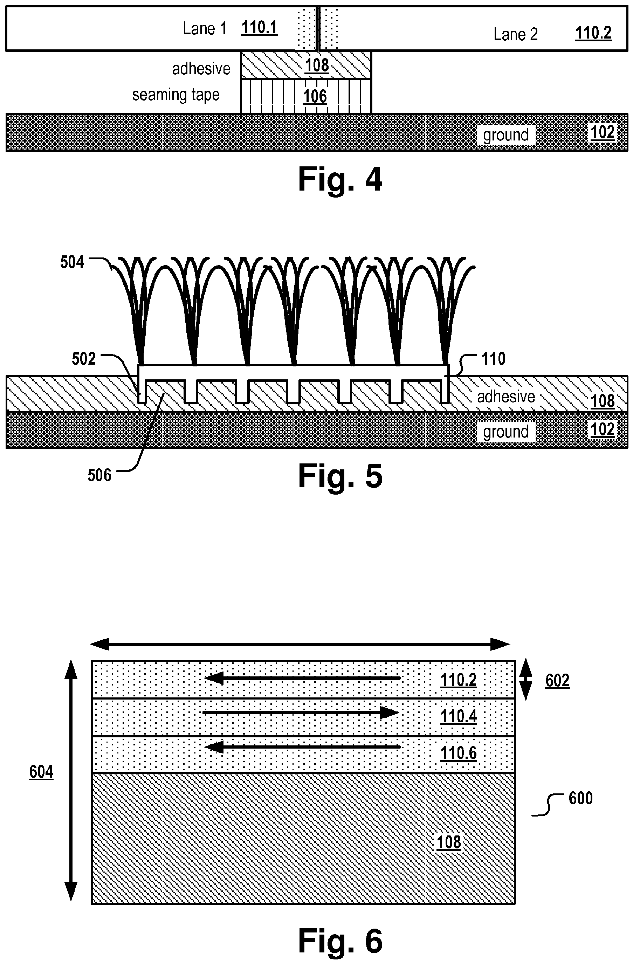

**Figure 4** depicts two lanes of a running track attached to each other via a seaming tape 106 covered with the PU adhesive 108. Likewise, seaming tapes with an adhesive layer on top can preferably be used for attaching two pieces of artificial turf to each other. The seaming tape based approach depicted in figure 4 may have the advantage that no adhesive layer is necessary between the ground and the largest portion of the floor layer 110. For example, artificial turf is typically sufficiently heavy to stay in place without an adhesive layer, but a seaming tape covered with a layer of PU adhesive may ensure that the edges of the artificial turf lanes to not present a tripping hazard.

**Figure 5** depicts a piece of artificial turf 110 comprising a backing. The backing may be a latex backing or a PU based backing, for example. Bundles of synthetic fibers 504 are tufted into the backing. The tufted fiber bundles are arranged in rows, and where the fiber bundles are tufted into the backing, the lower side of the backing comprises respective protrusions 502 that emanate in direction of the lower side of the artificial turf. Between each pair of protrusion rows, a depression 506 in form of a groove is formed. As the PU adhesive layer 108 continues to expand after the artificial turf was placed on top of the adhesive layer, the grooves in the lower side of the artificial turf will be completely or at least partially filled with the PU adhesive. The PU adhesive may even partially penetrate the mesh used as a carrier into which the fibers were tufted. Thus, the PU adhesive may be particularly suited for firmly fixing lanes of artificial turf to the ground.

**Figure 6** depicts a rectangle sports field 600, e.g. an athletic track comprising multiple lanes 110.2, 110.4, 110.6. Each lane has a particular width 602 that is only a fraction of the width 604 of the track 600. The ground of the field 600 may be prepared, e.g. concreted and/or leveled, or unprepared.

A user 120 or a machine may already have applied the PU adhesive layer 108 on the whole ground. Thus, the lower side of the floor layer that may be provided in the form of multiple lanes is completely brought in contact with the adhesive layer (as depicted in figure 3). User 122 has already rolled out three lanes 110.2-110.6. The applied PU adhesive may have already started to slowly generate CO2 bubbles and a viscous foam. The foam is adapted to penetrate any gap that may arise between two adjacent lanes, thereby automatically sealing the surface of the running track 600.

Independently from the geometry in which the reaction mixture is applied to the ground, the foam/mixture should be in a liquid state when the prepolymer mixture is also applied on adjacent regions of the ground. This ensures that a continuous polyurethane adhesive layer is generated.

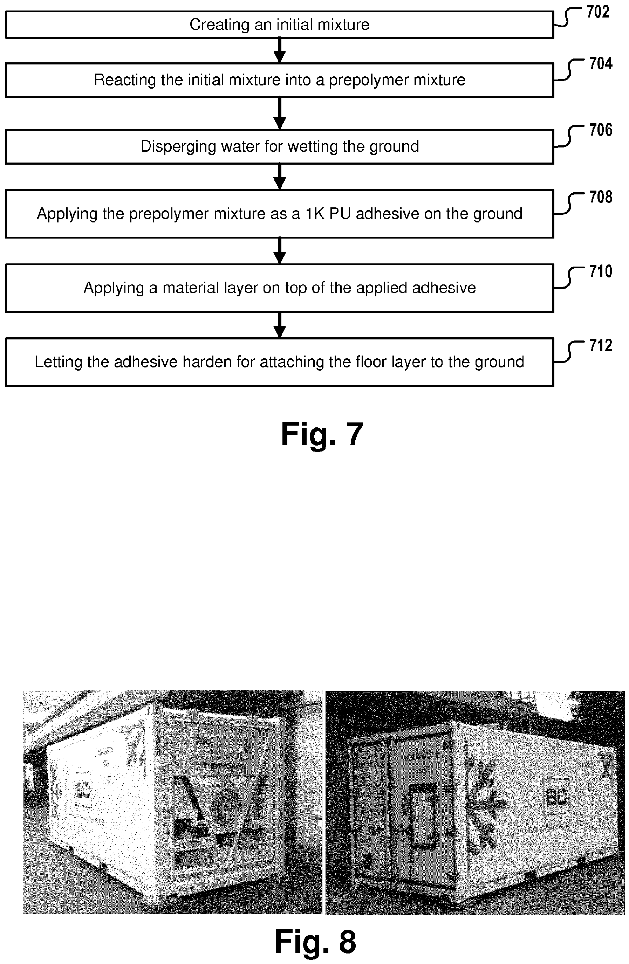

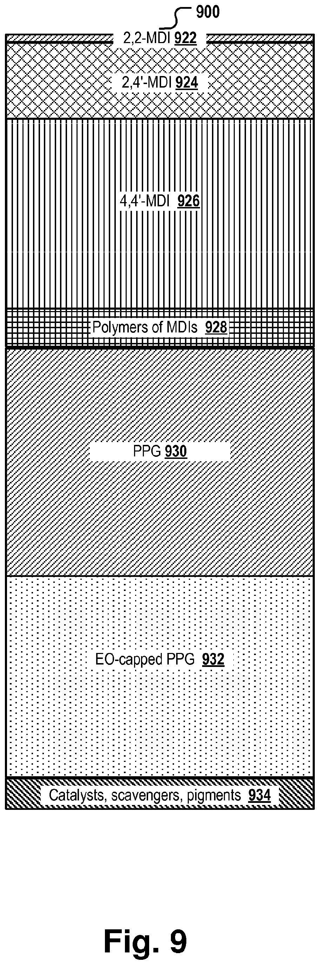

**Figure 7** is a flowchart of a method of generating a 1C PU system adapted for generating a PU based adhesive adapted to firmly attach a floor layer to the ground also at temperatures below 10°C, e.g. at 5°C or about 2°C. In a first step 702, an initial reaction mixture is generated, e.g. an initial mixture 900 depicted in figure 9. Then in step 704, the initial reaction mixture is reacted into a prepolymer mixture. Steps 702 and 704 are typically performed in a factory at temperatures higher than room temperature, e.g. 30-60°C. The resulting prepolymer mixture is then cooled to room temperature and stored until it is used.

In order to install a sports floor, e.g. a rubber-based sports floor or artificial grass, the sub-floor is preferably thoroughly cleaned. Paint, varnish and grease should be removed. Large cracks can be filled with latex crack filler. Small cracks will be filled by the PU based adhesive.

In an optional step 706, water is dispersed in order to wet the cleaned floor layer. This will significantly reduce the time necessary for the hardening process to complete, e.g. from several hours to below one hour. For example, a user or a machine can use an atomizer for generating small water droplets for wetting the ground where the adhesive is to be applied.

Next in step 708, the prepolymer mixture is applied on regions of the ground where the floor layer shall be attached or on a seaming tape to form an adhesive layer 108. For example, a human or a machine may spread the adhesive such that a basically even adhesive layer of about 2-8 mm is applied on the ground or on the upper surface of the seaming tape. Depending on the profile of the lower side of the floor layer to be applied, the thickness of the adhesive layer may also be smaller or larger. For example, the prepolymer mixture can be applied to the ground by a vehicle or by an apparatus carried by a user.

Next in step 710, the floor layer 110, e.g. an elastic PU-based sports ground layer, or artificial turf, is applied on the adhesive layer 108. The floor layer is laid down such that no air pockets are allowed to form. In some applications, in particular indoor applications, the floor layer is rolled with a carpet roller to assure bonding of the lower side of the floor layer to the adhesive.

Finally, in step 712 the adhesive is allowed to harden and to firmly attach the floor layer to the ground. It has been observed that the adhesive hardens at 5°C at average air humidity within 30 min- 3 hours if no water is added and hardens under the same temperature conditions within 10-20 minutes if the step 706 is performed.

**Figure 8** depicts the back side (left) and front side (right) of a temperature controlled container that was used for empirically testing the suitability of various prepolymer mixtures for providing a 1C PU adhesive adapted to harden within 24 hours or earlier also at temperatures below 10°C, below 5° C or even below 0°C.

The viscosity of a PU adhesive and the time until the adhesive is completely cured varies as a function of the temperature. When the temperature drops, the viscosity of the binder increases. The binder becomes viscid and can be spread worse. A standard PU adhesive referred herein as "Standard" was compared with various prepolymer mixtures generated from an initial mixture comprising EO-end-capped PPG by measuring the viscosity and hardening time of the PU adhesive at different temperatures in the temperature controlled containers. It was observed that the standard PU adhesive made from an initial mixture that did not comprise any EO-end-capped PPG did not harden acceptably fast at temperatures below 10°C. To the contrary, the PU adhesive generated from an initial mixture comprising EO-end-capped PPG was able to harden also at low temperatures within 24 hours even if no water was explicitly added to the ground. Moreover, the PU adhesive according to embodiments of the invention were observed to be easily processable and spreadable also at low temperatures (<5 ° C).

**Figure 9** illustrates the composition of an initial mixture 900 for generating a 1C PU based adhesive that is applicable also at low temperatures.

A monomeric MDI mixture and a polymeric MDI are introduced into a reaction vessel and heated under stirring to 40 ° to 60 ° C, preferably 30°C.

Under stirring, the polyol components PPG and EO-end-capped PPG are added and the mixture is stirred until a desired NCO content is approximately reached, which was to be expected according to the stoichiometry chosen. For example, a prepolymer mixture with an NCO content between 9.0 and 10.0 has been observed to provide a prepolymer mixture with desired properties.

Thereafter, the stabilizer phosphor acid and/or rheological additives 934 are added to the generated prepolymer mixture. The whole stirring process can take about 1 hour, whereby the temperature is preferably increased to 45°C to 60°C. Then, the generated prepolymer mixture is cooled to room temperature. About 24 hours later, the reaction of the initial mixture 900 into the prepolymer mixture is completed. The resulting prepolymer mixture comprises about 10-12% monomeric MDI and about 88-90% prepolymer.

Polyurethane prepolymers are formed by combining an excess of diisocyanate monomers with a premix polyol. One of the NCO groups of the diisocyanate monomers reacts with one of the OH groups of the premix polyol. The other end of the polyol reacts with another diisocyanate. The resulting prepolymer has an isocyanate group on both ends. The prepolymer is a diisocyanate itself, and it reacts like a diisocyanate but with several important differences. When compared with the original diisocyanate, the prepolymer has a greater molecular weight, a higher viscosity, a lower isocyanate content by weight (%NCO), and a lower vapor pressure. Prepolymers can be made under controlled conditions in a manufacturing plant. A dry nitrogen atmosphere protects isocyanates from atmospheric moisture and protects polyols from oxidation.

The NCO groups of the MDI monomers and the polymeric MDI react with OH groups of the polyol component in the initial mixture into a prepolymer. Not all educts in the initial mixture react into the prepolymer, therefore the prepolymer mixture comprises some remaining educts, in particular some monomeric MDI.

The viscosity and other properties of the prepolymer mixture strongly depend on the type of prepolymer generated and hence strongly depend on the composition of the initial mixture 900.

According to the depicted example, the following components were added to provide an initial mixture 900:
- 2,2' monomeric MDI 922 1.19% by weight of the initial mixture;
- 2,4' monomeric MDI 924 8.5% by weight of the initial mixture;
- 4,4' monomeric MDI 926 23% by weight of the initial mixture;
- polymeric MDI 928 4.8% by weight of the initial mixture;
- PPG 930 29% by weight of the initial mixture; (the PPG can have the following properties: average molecular weight: 2000 g/mol; OH-number: 56; viscosity at 25°C: 350 mPas; for example, the PPG can comprise terminal end-groups which are predominantly secondary hydroxyls and have a relatively low reactivity; the PPG can be acidified with a low level of phosphoric acid;
- EO-end-capped PPG 932 26.8% by weight of the initial mixture; (the EO-end-capped PPG can have the following properties: OH number: 29, average molecular weight: 4000 g/mol, viscosity: 780 mPas at 25 °C; said mixture is commercially available, e.g. as "Lupranol 2043", BASF)
- About 4% by weight of the initial mixture comprise pigments, catalysts, phosphor acid as a stabilizer, and rheological substances, e.g. "Additive TI".

After having reacted the initial mixture into the prepolymer mixture, the prepolymer mixture can be used as one-component PU-based adhesive that is adapted to cure based on the air humidity or the humidity of the ground.

The generated prepolymer mixture can be stored at room temperature for several months or longer.

### List of reference numerals

- 102: ground
- 104: water film
- 106: seaming tape
- 108: adhesive layer
- 110: floor layer, e.g. elastic layer of a sports field
- 110.1, - 110.6: lane of a running track
- 112: prepolymer mixture
- 114: water tank
- 118: user applying water
- 120: user applying the prepolymer mixture
- 122: user applying the floor layer
- 502: protrusions from the lower side of an artificial turf
- 504: artificial turf fibers
- 506: depressions (space between two rows of protrusions)
- 600: running field
- 602: width of a running track lane
- 604: width of a running field
- 702-712: steps
- 900: initial mixture
- 922: 2,2' MDI monomer
- 924: 2,4' MDI monomer
- 926: 4,4' MDI monomer
- 928: polymeric MDI
- 930: PPG
- 932: EO-end-capped PPG
- 934: catalysts and supplements

## Claims

1. A method for producing a 1C polyurethane adhesive (112), the method comprising:
- creating (702) an initial mixture (900) comprising:
• a mixture of MDI monomers, the MDI monomers comprising 2,2' MDI, 2,4' MDI and 4,4' MDI;
• polymeric MDI;
• a polyol component comprising:
• an EO-end-capped polypropylene glycol (932); and
• a further polyol (930);
- reacting (704) the initial mixture into a prepolymer mixture, the prepolymer mixture comprising a prepolymer being the reaction product of the MDI monomers, the polymeric MDI and the polyol component, wherein the prepolymer mixture is the 1C polyurethane adhesive.

2. The method of claim 1, the initial mixture comprising:
- the 2,2' monomeric MDI in an amount of 0.50% - 2.0% by weight of the initial mixture;
- the 2,4' monomeric MDI in an amount of 8.99% - 10.1% by weight of the initial mixture; and
- the 4,4' monomeric MDI in an amount of 21.69% - 26.0% by weight of the initial mixture.

3. The method of any one of the previous claims, the initial mixture comprising:
- the polymeric MDI in an amount of 3.6% - 7.2% by weight of the initial mixture.

4. The method of any one of the previous claims, the further polyol being polypropylene glycol.

5. The method of any one of the previous claims, the further polyol having a viscosity of 250-450 mPa/s at 25°C and/or an average molecular weight of 1700-2300 g/mol and/or an OH-number of 50-60.

6. The method of any one of the previous claims, the initial mixture comprising:
- the further polyol in an amount of 24% - 34% by weight of the initial mixture.

7. The method of any one of the previous claims, the initial mixture comprising:
- the EO-end capped polypropylene glycol in an amount of 22.7% - 31.0% by weight of the initial mixture.

8. The method of any one of the previous claims, the EO-end-capped polypropylene glycol having a viscosity of 650-850 mPa/s at 25°C and/or an average molecular weight of 3700-4300 g/mol and/or an OH-number of 25-35.

9. The method of any one of the previous claims, the initial mixture comprising a curing catalyst, in particular a dioctyltin mercaptide catalyst, and an amine blowing catalyst, in particular 2,2'-Dimorpholinodiethylether (DMDEE).

10. The method of any one of the previous claims the prepolymer mixture comprising:
- the prepolymer in an amount of 88% - 90% by weight of the prepolymer mixture; and/or
- the monomeric 2,2' MDI and 2,4' MDI combined in an amount of 10%-12%- by weight of the prepolymer mixture.

11. The method of any one of the previous claims, the initial mixture further comprising phosphor acid and/or a moisture scavenger and/or rheological additives.

12. A method of attaching a floor layer (110), the method comprising:
- applying (706) the polyurethane adhesive (112) created according to any one of claims 1-12 on a ground (102) or on a seaming tape (106); and
- letting the applied polyurethane adhesive foam and expand; and
- placing (710) the floor layer on top of the expanded polyurethane adhesive before the adhesive has hardened completely.

13. The method of claim 12, further comprising:
- after the adhesive was applied on the ground or on the seaming tape, applying (706) dispensed water droplets on the applied adhesive for accelerating the hardening of the adhesive.

14. The method of any one of the previous claims 12-13, wherein the side of the floor layer that is brought in contact with the expanded polyurethane adhesive comprises grooves (506), wherein the polyurethane adhesive is applied in such amount that foamed, fully expanded adhesive layer is at least as high as the grooves.

15. The method of any one of the previous claims 12-14, the floor layer being an artificial turf or a hybrid turf support, the grooves being formed and delimited by tuft rows (502) or seam rows protruding from the artificial turf, wherein synthetic fibers (504) are incorporated in the artificial turf or the hybrid turf support along the tuft rows or seam rows, wherein the synthetic fibers emanate from the turf in opposite direction than the tuft rows or seam rows.

16. The method of any one of the previous claims 12-15, the polyurethane adhesive being applied on the ground at an environmental temperature lower than 10°C, in particular at a temperature lower than 5°C, in particular at a temperature lower than 0°C, e.g. in a range from 10°C to -5°C.

17. The method of any one of claims 12-16, the floor layer being selected from a group comprising:
- an elastic sub-construction layer for athletic tracks and playgrounds;
- an elastic base layer for athletic tracks and playgrounds;
- an in-situ foamed elastic athletic track or playground surface;
- a hybrid turf support structure;
- an artificial turf;
- outdoor surfaces, in particular tiles, matts, strip materials and carpet sheetings.

18. A floor layer (110) attached to a ground (102) or attached to a seaming tape (106), the floor layer being attached via a hardened 1C polyurethane adhesive manufactured by a method according to any one of claims 1-11.

## Patentansprüche

1. Verfahren zum Herstellen eines 1C-Polyurethanklebstoffs (112), wobei das Verfahren umfasst:
- Erzeugen (702) einer Ausgangsmischung (900), die umfasst:
• eine Mischung aus MDI-Monomeren, wobei die MDI-Monomere 2,2'-MDI, 2,4'-MDI und 4,4'-MDI umfassen;
• polymeres MDI;
• eine Polyolkomponente, die umfasst:
• ein EO-endverkapptes Polypropylenglycol (932); und
• ein weiteres Polyol (930);
- Umsetzen (704) der Ausgangsmischung zu einer Vorpolymermischung, wobei die Vorpolymermischung ein Vorpolymer umfasst, welches das Reaktionsprodukt der MDI-Monomere, des polymeren MDI und der Polyolkomponente umfasst, wobei die Vorpolymermischung der 1C-Polyurethanklebstoff ist.

2. Verfahren nach Anspruch 1, wobei die Ausgangsmischung umfasst:
- das monomere 2,2'-MDI in einer Menge von 0,50 % bis 2,0 %, bezogen auf das Gewicht der Ausgangsmischung;
- das monomere 2,4'-MDI in einer Menge von 8,99 % bis 10,1 %, bezogen auf das Gewicht der Ausgangsmischung; und
- das monomere 4,4'-MDI in einer Menge von 21,69 % bis 26,0 %, bezogen auf das Gewicht der Ausgangsmischung.

3. Verfahren nach einem der vorangehenden Ansprüche, wobei die Ausgangsmischung umfasst:
- das polymere MDI in einer Menge von 3,6 % bis 7,2 %, bezogen auf das Gewicht der Ausgangsmischung.

4. Verfahren nach einem der vorangehenden Ansprüche, wobei das weitere Polyol Polypropylenglycol ist.

5. Verfahren nach einem der vorangehenden Ansprüche, wobei das weitere Polyol eine Viskosität von 250-450 mPa/s bei 25 °C und/oder ein durchschnittliches Molekulargewicht von 1700-2300 g/mol und/oder eine OH-Zahl von 50-60 aufweist.

6. Verfahren nach einem der vorangehenden Ansprüche, wobei die Ausgangsmischung umfasst:
- das weitere Polyol in einer Menge von 24 % bis 34 %, bezogen auf das Gewicht der Ausgangsmischung.

7. Verfahren nach einem der vorangehenden Ansprüche, wobei die Ausgangsmischung umfasst:
- das EO-endverkappte Polypropylenglycol in einer Menge von 22,7 % bis 31,0 %, bezogen auf das Gewicht der Ausgangsmischung.

8. Verfahren nach einem der vorangehenden Ansprüche, wobei das EO-endverkappte Polypropylenglycol mit einer Viskosität von 650-850 mPa/s bei 25 °C und/oder ein durchschnittliches Molekulargewicht von 3700-4300 g/mol und/oder eine OH-Zahl von 25-35 aufweist.

9. Verfahren nach einem der vorangehenden Ansprüche, wobei die Ausgangsmischung einen Härtungskatalysator, insbesondere einen Dioctylzinnmercaptid-Katalysator, und einen Amin-Blähkatalysator, insbesondere 2,2'-Dimorpholindiethylether (DMDEE). umfasst.

10. Verfahren nach einem der vorangehenden Ansprüche, wobei die Vorpolymermischung umfasst:
- das Vorpolymer in einer Menge von 88 % bis 90 %, bezogen auf das Gewicht der Vorpolymermischung; und/oder
- das monomere 2,2'-MDI und 2,4'-MDI kombiniert, in einer Menge von 10 % bis 12 %, bezogen auf das Gewicht der Vorpolymermischung.

11. Verfahren nach einem der vorangehenden Ansprüche, wobei die Ausgangsmischung ferner Phosphorsäure und/oder einen Feuchtigkeitsfänger und/oder rheologische Zusätze umfasst.

12. Verfahren zum Befestigen einer Bodenschicht (110), wobei das Verfahren umfasst:
- Aufbringen (706) des Polyurethanklebstoffs (112), der gemäß einem der Ansprüche 1-12 erzeugt wurde, auf einen Untergrund (102) oder auf ein Nahtband (106); und
- Schäumen und Expandieren lassen des aufgebrachten Polyurethanklebstoffs; und
- Auflegen (710) der Bodenschicht auf den expandierten Polyurethanklebstoff, bevor der Klebstoff vollständig ausgehärtet ist.

13. Verfahren nach Anspruch 12, ferner umfassend:
- nach dem Auftragen des Klebstoffs auf den Untergrund oder auf das Nahtband: Besprühen (706) des aufgetragenen Klebstoffs mit Wasser, um die Aushärtung des Klebstoffs zu beschleunigen.

14. Verfahren nach einem der vorangehenden Ansprüche 12-13, wobei die Seite der Bodenschicht, die mit dem expandierten Polyurethanklebstoff in Kontakt gebracht wird, Rillen (506) umfasst, wobei der Polyurethanklebstoff in einer solchen Menge aufgebracht wird, dass die geschäumte, voll expandierte Klebstoffschicht mindestens so hoch ist wie die Rillen.

15. Verfahren nach einem der vorangehenden Ansprüche 12-14, wobei die Bodenschicht ein Kunstrasen- oder Hybridrasenträger ist, wobei die Rillen durch Rasenreihen (502) oder Nahtreihen, die vom Kunstrasen überstehen, gebildet und begrenzt werden, wobei synthetische Fasern (504) entlang der Rasenreihen oder Nahtreihen in den Kunstrasen- oder Hybridrasenträger aufgenommen werden, wobei die synthetischen Fasern in einer Richtung von dem Rasen ausgehen, die der Richtung der Rasenreihen oder Nahtreihen entgegengesetzt ist.

16. Verfahren nach einem der vorangehenden Ansprüche 12-15, wobei der Polyurethanklebstoff bei einer Umgebungstemperatur von unter 10 °C auf den Untergrund aufgebracht wird, insbesondere bei einer Temperatur von unter 5 °C, insbesondere bei einer Temperatur von unter 0 °C, z.B. in einem Bereich von 10 °C bis -5 °C.

17. Verfahren nach einem der Ansprüche 12-16, wobei die Bodenschicht aus einer Gruppe ausgewählt ist, die umfasst:
- eine elastische Unterkonstruktionsschicht für Sportbahnen und Spielplätze;
- eine elastische Basisschicht für Sportbahnen und Spielplätze;
- eine in situ geschäumte elastische Sportbahn- oder Spielplatzoberfläche;
- eine Hybridrasenträgerstruktur;
- einen Kunstrasen;
- Flächen für den Außenbereich, insbesondere Kacheln, Matten, Streifenmaterialien und Teppich-Flächengebilde.

18. Bodenschicht (110), die an einem Untergrund (102) angebracht ist oder an einem Nahtband (106) angebracht ist, wobei die Bodenschicht über einen gehärteten 1C-Polyurethanklebstoff angebracht worden ist, der anhand eines Verfahrens nach einem der Ansprüche 1-11 hergestellt wurde.

## Revendications

1. Procédé de production d'un adhésif polyuréthanne 1C (112) le procédé comprenant :
- la création (702) d'un mélange initial (900) comprenant :
• un mélange de monomères de MDI, les monomères de MDI comprenant du 2,2' MDI, du 2,4' MDI et du 4,4' MDI ;
• du MDI polymérique ;
• un composant polyol comprenant :
• un polypropylène glycol coiffé d'OE à son extrémité (932) ; et
• un autre polyol (930) ;
- la réaction (704) du mélange initial pour faire un mélange de prépolymères, le mélange de prépolymères comprenant un prépolymère étant un produit de réaction des monomères de MDI, du MDI polymérique et du composant polyol, où le mélange de prépolymères est un adhésif polyuréthanne 1C.

2. Procédé selon la revendication 1, le mélange initial comprenant :
- le 2,2' MDI monomérique dans une quantité de 0,50 % à 2,0 % en poids du mélange initial ;
- le 2,4' MDI monomérique dans une quantité de 8,99 % à 10,1 % en poids du mélange initial ; et
- le 4,4' MDI monomérique dans une quantité de 21,69 % à 26,0 % en poids du mélange initial.

3. Procédé selon l'une quelconque des revendications précédentes, le mélange initial comprenant :
- le MDI polymérique dans une quantité de 3,6 % à 7,2 % en poids du mélange initial.

4. Procédé selon l'une quelconque des revendications précédentes, l'autre polyol étant du polypropylène glycol.

5. Procédé selon l'une quelconque des revendications précédentes, l'autre polyol ayant une viscosité de 250 à 450 mPa/s à 25 °C et/ou un poids moléculaire moyen de 1700 à 2300 g/mol et/ou un nombre de groupes OH de 50 à 60.

6. Procédé selon l'une quelconque des revendications précédentes, le mélange initial comprenant :
- l'autre polyol dans une quantité de 24 % à 34 % en poids de mélange initial.

7. Procédé selon l'une quelconque des revendications précédentes, le mélange initial comprenant :
- le polypropylène glycol coiffé d'OE à son extrémité dans une quantité de 22,7 % à 31,0 % en poids du mélange initial.

8. Procédé selon l'une quelconque des revendications précédentes, le polypropylène glycol coiffé d'OE à son extrémité ayant une viscosité de 650 à 850 mPa/s à 25 °C et/ou un poids moléculaire moyen de 3700 à 4300 g/mol et/ou un nombre de groupes OH de 25 à 35.

9. Procédé selon l'une quelconque des revendications précédentes, le mélange initial comprenant un catalyseur de réticulation, en particulier un catalyseur mercaptide de dioctyl étain, et un catalyseur de gonflement de type amine, en particulier, du di morpholino di éthyl éther (DMDEE).

10. Procédé selon l'une quelconque des revendications précédentes, le mélange de prépolymères comprenant :
- le prépolymère dans une quantité de 88 % à 90 % en poids du mélange de prépolymère ; et/ou
- le 2,2'MDI et le 2,4' MDI monomériques combinés dans une quantité de 10 % à 12 % en poids du mélange de prépolymères.

11. Procédé selon l'une quelconque des revendications précédentes, le mélange initial comprenant en outre un acide de phosphore et/ou un capteur d'humidité et/ou des additifs rhéologiques.

12. Procédé de fixation d'une couche de sol (110), le procédé comprenant :
- l'application (706) de l'adhésif polyuréthanne (112) créé selon l'une quelconque des revendications 1 à 12 sur une base (102) ou sur une bande de jonction (106) ; et
- le fait de laisser l'adhésif polyuréthanne appliqué se transformer en mousse et s'expanser ; et
- la mise en place (710) de la couche de sol sur le dessus de l'adhésif polyuréthanne expansé avant que l'adhésif ne soit complètement durci.

13. Procédé selon la revendication 12, comprenant en outre :
- après que l'adhésif ait été appliqué sur la base ou sur la bande de jonction, l'application (706) de gouttelettes d'eau distribuées sur l'adhésif appliqué pour accélérer le durcissement de l'adhésif.

14. Procédé selon l'une quelconque des revendications précédentes 12 ou 13, dans lequel la face de la couche de sol qui est mise en contact avec l'adhésif polyuréthanne expansé comprend des rainures (506), où l'adhésif polyuréthanne est appliqué dans une quantité telle que la couche adhésive sous forme de mousse totalement expansée est au moins aussi importante que les rainures.

15. Procédé selon l'une quelconque des revendications précédentes 12 à 14, la couche de sol étant un gazon artificiel ou un support de gazon hybride, les rainures étant formées et délimitées par des rangées de gazon (502) ou des rangées de semis dépassant du gazon artificiel, où des fibres synthétiques (504) sont incorporées dans le gazon artificiel ou dans le support de gazon hybride le long des rangées de gazon ou des rangées de semis, où les fibres synthétiques proviennent du gazon dans la direction opposée aux rangées de gazon ou aux rangées de semis.

16. Procédé selon l'une quelconque des revendications précédentes 12 à 15, l'adhésif polyuréthanne étant appliqué sur la base à une température environnementale inférieure à 10 °C, en particulier, à une température inférieure à 5 °C, en particulier, à une température inférieure à 0 °C, par exemple, dans une plage de 10 °C à -5 °C.

17. Procédé selon l'une quelconque des revendications précédentes 12 à 16, la couche de sol étant choisie dans le groupe comprenant :
- une couche de sous-structure élastique pour des pistes d'athlétisme ou des terrains de jeux ;
- une couche de base élastique pour des pistes d'athlétisme ou des terrains de jeux ;
- une piste d'athlétisme élastique ou une surface de terrain de jeux à mousse formée in situ ;
- une structure de support de gazon hybride ;
- un gazon artificiel ;
- des surfaces à l'extérieur, en particulier, des carreaux, des tapis, des matériaux en bandes et des revêtements de tapis.

18. Couche de sol (110) fixée sur une base (102) ou fixée sur une bande de jonction (106), la couche de sol étant fixée par le biais d'un adhésif polyuréthanne 1C durci fabriqué d'après un procédé selon l'une quelconque des revendications 1 à 11.
